# EUROPEAN PATENT APPLICATION

(11) **EP 2 940 930 A1**
(43) Date of publication of application: **04.11.2015**
(21) Application number: 14305629.9
(22) Date of filing: 28.04.2014
(51) Int. Cl.: H04L 12/24, H04L 29/08

(54) **Upgrading a gateway**

(71) Applicant: Thomson Licensing, 92130 Issy-les-Moulineaux (FR)
(72) Inventor: Di Cioccio, Lucas, 92443 Issy-les-Moulineaux (FR); Chandrashekar, Jaideep, 92443 Issy-les-Moulineaux (FR); Le Guyadec, Pascal, 92443 Issy-les-Moulineaux (FR); Soule, Augustin, 92443 Issy-les-Moulineaux (FR)
(74) Representative: Browaeys, Jean-Philippe

(57) **Abstract**

Method for determining at least one time window suitable for an upgrade of a gateway (12, 14, 16), comprising :
- monitoring the activity of the gateway (12, 14, 16) over a plurality of time periods;
- determination of the time window on the basis of the monitoring, such that the activity of the gateway (12, 14, 16) during said time window is compatible with said upgrade.

## Description

### FIELD OF THE INVENTION

The present invention generally relates to the field of home Internet networks.

More particularly, the invention deals with the upgrade of the gateways used in such networks.

Thus, the invention concerns a method for determining a time window suitable for an upgrade of a gateway. It also concerns a method for upgrading a gateway and a method for upgrading a plurality of gateways. It further concerns a gateway and a server. It also concerns a computer program implementing the determination method of the invention.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Upgrading the firmware on home Internet gateways across a large installed base of home internet users is a long and challenging process for most Internet Service Providers (ISP) and can take as much as half a year. This is mainly due to the fact that service upgrades cause outages and have to be planned in time periods when they have no impact on end-users activities, i.e. when there are no users using the Internet connection.

Thus, without knowledge of the actual activity of the users' home networks, the ISP generally schedules these upgrades late at night or early in the morning when there is a higher probability of a network inactivity. As this process is carried out "in the blind", the ISP has to necessarily apply upgrades gradually, choosing a small population of clients each time. The next set of clients for the upgrade is then selected after ensuring that there is no service degradation, as observed over a given period of time.

Accordingly, with the prior art solutions, the upgrading can be scheduled only over a limited time period, generally at night time.

### SUMMARY OF THE INVENTION

The present invention proposes a solution for improving the situation.

Accordingly, the present invention provides a method for determining at least one time window suitable for an upgrade of a gateway, comprising :
- monitoring the activity of the gateway over a plurality of time periods;
- determination of the time window on the basis of the monitoring, such that the activity of the gateway during said time window is compatible with said upgrade.

An upgrade of a gateway generally corresponds to the act of updating the software and firmware installed in the gateway.

Thus, with the present invention, it is possible to identify time windows in which the gateway upgrade is less likely to disturb the customer service. Then, the risk of degradation of the service is reduced with the present invention.

Furthermore, the ISP has more flexibility to carry out the upgrades without being limited to a particular time period or interval (e.g., nighttime or weekends).

Advantageously, the monitoring of the activity of the gateway comprises an analysis of data traffic through the gateway.

The data traffic comprises different kinds of traffic such as Internet, video, voice, etc. Its volume corresponds to the number of bytes and/or packets transmitted through the gateway.

The traffic volume may be advantageously computed separately for each kind of traffic.

Advantageously, the method comprises calculating, for each time period, the probability that the traffic volume, during said time period, is lower than a determined traffic threshold.

The traffic threshold may be determined by an operator, for instance from the ISP side or even the user, and corresponds to the activity level, as captured by the traffic, that the operator is willing to interrupt.

A value of the traffic threshold may be set to 0 bits per second, i.e. no traffic at all, but since there is always some background traffic in home networks, it is recommended to set other values.

Preferably, a recommended value for the traffic threshold corresponds to the amount of traffic generated by the monitoring of the gateway's activity itself.

Advantageously, the determination of the time window comprises a comparison of the calculated probabilities with a determined probability threshold.

Preferably, the probability threshold is comprised between 0.75 and 1, for instance equal to 0.9.

Advantageously, the monitoring of the activity of the gateway comprises monitoring if said gateway is turned on or turned off.

Indeed, some users turn their gateway off to save energy. If a user reboots the gateway while it is upgraded, the upgrade process might crash and leave the gateway in a "bricked" unusable state. Thus, by monitoring the status ON/OFF of the gateway, it is possible to predict when the user is likely to turn the gateway off and to avoid upgrading at this time.

Advantageously, the time window has a duration higher than a minimal duration.

This minimal duration corresponds typically to the time necessary for upgrading the gateway. This time may be equal to several minutes, for instance 30 minutes. This period is called the 'upgrade window'.

According to an embodiment, the method comprises weighting the time periods.

This weighting permits to change the relevance of different time periods. For instance, a weight of 0 may be applied to week-end days in order to remove these days from consideration for the gateway upgrade.

According to a first embodiment, the determination of the time window is implemented by the gateway.

This embodiment is preferred when there is a need to preserve the privacy of the home network's use, as it avoids sending any information to an external server.

According to a second embodiment, the determination of the time window is implemented by a server which receives a monitoring report from the gateway.

For instance, the server is an ISP server. This embodiment is preferred when the computational capability of the gateway is limited.

The invention further provides a method for upgrading a gateway by a server, comprising:
- obtaining the time window determined by the determination method of the invention for the gateway;
- upgrading the gateway during said time window.

The invention also provides a method for upgrading a plurality of gateways by a server, comprising:
- collecting the time windows determined by the determination method of the invention for the plurality of gateways;
- logically grouping gateways having at least one common time window; and
- upgrading together said grouped gateways during said common time window.

The invention further provides a gateway able to determine at least one time window suitable for its upgrade, comprising :
- a monitoring module able to monitor the gateway's activity over a plurality of time periods;
- a determination module able to determine the time window on the basis of the monitoring, such that the gateway's activity during said time window is compatible with said upgrade.

The invention further provides a server able to upgrade at least one gateway, comprising :
- a reception module for receiving results of a monitoring of the gateway's activity over a plurality of time periods;
- a determination module able to determine a time window suitable for the upgrade of the gateway on the basis of the monitoring results, such that the gateway's activity during said time window is compatible with said upgrade;
- an upgrading module able to upgrade the gateway during said time window.

Advantageously, the server comprises a grouping module able to logically group gateways having at least one common time window, wherein the upgrading module is able to upgrade together the grouped gateways during said common time window.

The method according to the invention may be implemented in software on a programmable apparatus. It may be implemented solely in hardware or in software, or in a combination thereof. Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

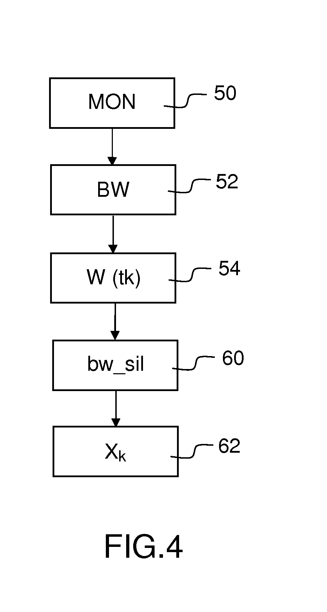

The invention thus provides a computer-readable program comprising computer-executable instructions to enable a computer to perform the determination method of the invention. The diagram of figure 4 illustrates an example of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view of an example of system in which the embodiments of the methods of the present invention are advantageously implemented;
- Figure 2 is a schematic view of a gateway according to an embodiment of the present invention;
- Figure 3 is a schematic view of a server according to an embodiment of the present invention; and
- Figure 4 is a flowchart showing the steps of the determination method according to an embodiment of the present invention.

### DETAILED DESCRIPTION OF PREFERRED EMBODIMENTS

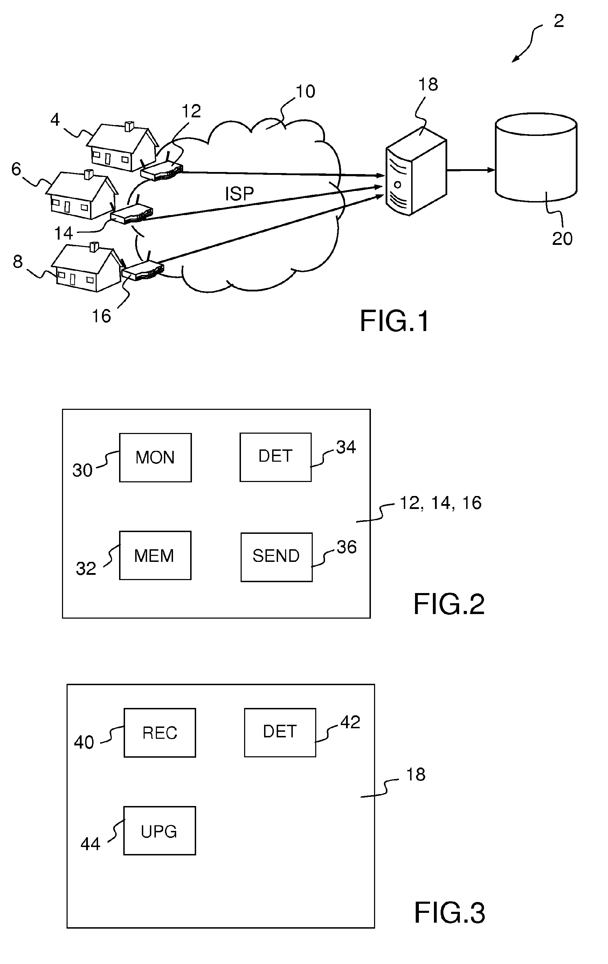

Referring to Figure 1, there is shown therein a schematic view of a system 2 implementing an embodiment of the present invention.

The system 2 comprises different home networks 4, 6, 8 connected to an ISP network 10 through gateways 12, 14, 16 respectively.

It is assumed that the home networks 4, 6, 8 are served by the same ISP.

The gateways 12, 14, 16 are able to communicate with a server 18 of the ISP through the ISP network 10.

Furthermore, the server 18 is connected to a data store 20 storing data relative to the home networks 4, 6, 8 of the subscribers of the ISP.

The server 18 is able to upgrade the software and firmware of the gateways 12, 14, 16 when this upgrade is necessary.

According to an embodiment of the present invention, the upgrade of each gateway takes place at a suitable time window computed optimally by the gateway itself. When a common time window is available for a group of gateways, the server upgrades advantageously the gateways of the group simultaneously during this common time window.

Figure 2 is a schematic view representing the structure of the gateway 12 according to an embodiment of the present invention. It is assumed that the gateways 14, 16 have the same structure.

The gateway 12 comprises a monitoring module 30 able to monitor the gateway's activity over a plurality of time periods. These time periods represent the time granularity needed for the monitoring. The server 18 sets these time periods as needed.

For example, the gateway 12 may monitor its activity during a whole week with a time granularity of 15 minutes, i.e. there are 7*24*4=672 time periods. In each time period, the traffic volumes corresponding to particular activities (Internet use, IPTV use, VoIP use, etc.) are recorded.

The gateway 12 also comprises a storage module 32, i.e. a memory, for storing the monitoring results of the plurality of time periods.

The gateway 12 further comprises a determination module 34 able to determine at least one time window on the basis of the monitoring results, such that the gateway's activity during said time window is compatible with said upgrade. The determination module 34 is for instance a processor.

Besides, the gateway 12 comprises a sending module 36 able to send the determination result to the server 18.

According to an embodiment, the sending module 36 is also able to send the monitoring results stored in the storage module 32 to the server 18. These monitoring results may be sent periodically using, for example, HTTP POST queries or any other suitable protocol.

Figure 3 is a schematic view representing the structure of the server 18 according to an embodiment of the present invention.

The server 18 comprises a reception module 40 for receiving the results of the monitoring carried by the gateways 12, 14, 16. The reception module 40 may, for instance, pull the monitoring results from the gateways 12, 14, 16 with SNMP ("Simple Network Management Protocol") or any other transport protocol. An alternate embodiment might make use of a standard web server to receive monitoring reports over HTTP protocol.

The server 18 also comprises a determination module 42 able to determine at least one time window suitable for the upgrade of the gateway 12, 14, 16 on the basis of the monitoring results, such that the gateway's activity during said time window is compatible with said upgrade. The determination module 42 is then able to store the determined time window(s) in the data store 20.

If the time window for the upgrade has been already determined by the gateway itself, the reception module 40 is able to receive the determination result and then to forward it to the determination module 42, which will be able to store it in the data store 20.

The server 18 also comprises an upgrading module 44 able to upgrade the gateway 12, 14, 16 during the determined time window, by the determination module 34 of the gateway or by the determination module 42 of the server.

The details of the method for determining at least one time window suitable for the upgrade of the gateway 12 will be described now with reference to the flowchart of Figure 4. This description is also applicable for the other gateways 14, 16.

Firstly, a number of input parameters are set by an operator, preferably the server 18.

The first parameter is the maximum amount of traffic that the operator is willing to interrupt. This value is called the threshold silence in the following and noted "bw_sil". A possible value is 0 bits per second, i.e., no traffic at all, but since there is always some background traffic in home networks, the operator can set other values. An example of recommended value is the amount of traffic generated by the monitoring process itself.

A second parameter is a probability threshold, noted p_threshold, which captures the probability that the traffic volume is lower than the expected threshold. A typical value is 0.9.

The third parameter is the minimal duration of the determined time window, called upgrade_window. For instance, if updating a home gateway takes 30 minutes, the operator will be looking for upgrade windows during at least 30 minutes.

For instance, with p_threshold = 0.9, upgrade_window = 30 minutes, and bw_silence = 1kbps, the determination method of the invention will output periods of the day, for example, from "8:01 am to 9:24am on Wednesdays", that are at least 30-minutes long and where there is 90% of chance that the traffic does not exceed 1 kbps.

Optionally, the operator also provides a time granularity to set time periods of the same length, noted tb, and a weighing function, noted W, to add a significance weight to the time periods.

The different steps of the determination method according to an embodiment of the invention are detailed in the following description.

At step 50, the monitoring module 30 monitors the activity of the gateway 12 over a plurality of time periods of duration tb already set by the server 18 according to the needs of the ISP. For instance tb may be set equal to 15 minutes and the monitoring is carried all the time during one week.

According to an embodiment, the monitoring of the activity of the gateway 12 comprises an analysis of data traffic transmitted and received through the gateway 12. Thus, the gateway 12 keeps track of the number of bytes and packets of different kinds of traffic routed through said gateway 12.

Preferably, the monitoring of the activity of the gateway 12 also comprises monitoring if said gateway 12 is turned on or turned off.

At step 52, the determination module 34 computes the bandwidth bk consumed by the gateway 12 in each time period [tk*tb, (tk+1)*tb], where tk is a natural number.

For instance, the bandwidth bk may be computed by an interpolation of the traffic volumes at tk and tk+tb.

At step 54, the determination module 34 applies the weighting function W to all the time periods, in order to obtain an effective bandwidth Bk = bk*W(tk) for each time period.

This weighting permits to change the relevance of different time periods. For instance, a weight of +infinity may be applied to week-end days in order to remove these days from consideration for the gateway upgrade.

At step 60, the determination module 34 compares, for each time period, the effective bandwidth Bk with the traffic threshold bw_sil which represents the maximum amount of traffic that can be interrupted without disturbing the operation of the home network 4. This traffic threshold may advantageously be set to the amount of traffic generated by the monitoring of the gateway's activity itself. For example, bw_sil = 1 kbps.

At step 62, the determination module 34 rates the time periods according to the comparison results by attributing to the k^{th} time period a Boolean value Sk=1 if the computed effective bandwidth in this time period is lower than the traffic threshold and a Boolean value Sk=0 otherwise.

The determination module uses a pre-selected aggregation time window expressed as a number N of time periods and associates each Sk value to a set, Xj, corresponding to each time window. For e.g., N would be set to 672 for an aggregation time window of one week and Xj (j = 1..N) is the set of all Sk values for the same time period on different days. Thus Xj = {Sk: k = j modulo N}. Thus for example, X1 would be the set of all Sk values that correspond to 00:15 AM to 00:30 AM for a given week.

The determination module 34 computes a probability pj for each time period as the fraction of Sk values equal to 1 in each Xj and then determines a set of consecutive time intervals L=[s,....,s+n] such that for each index j in [s, s+n], it holds that pj > p_threshold and (s+n) - s > upgrade_window. The last condition ensures that the contiguous block of time is sufficient to carry out the upgrade operation. Finally, the determination module 34 reports all the intervals {L} which satisfy these dual conditions.

The upgrading module 44 of the server 18 can then upgrade the gateway 12 during one of these determined intervals.

The upgrading module 44 may also prefer to upgrade simultaneously a plurality of gateways when there is at least one common interval determined for these gateways.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

## Claims

1. Method for determining at least one time window suitable for an upgrade of a gateway (12, 14, 16), comprising :
- monitoring (50) the activity of the gateway (12, 14, 16) over a plurality of time periods;
- determination (62) of the time window on the basis of the monitoring, such that the activity of the gateway (12, 14, 16) during said time window is compatible with said upgrade.

2. Method of claim 1, wherein the monitoring (50) of the activity of the gateway (12, 14, 16) comprises an analysis of data traffic through the gateway (12, 14, 16).

3. Method of claim 1 or 2, comprising calculating (62), for each time period, the probability that the traffic volume, during said time period, is lower than a determined traffic threshold.

4. Method of claim 3, wherein the determination of the time window comprises a comparison (62) of the calculated probabilities with a determined probability threshold.

5. Method of any one of claims 1 to 4, wherein the monitoring (50) of the activity of the gateway (12, 14, 16) comprises monitoring if said gateway (12, 14, 16) is turned on or turned off.

6. Method of any one of claims 1 to 5, wherein the time window has a duration higher than a minimal duration

7. Method of any one of claims 1 to 6, comprising weighting the time periods.

8. Method of any one of claims 1 to 7, wherein the determination (62) of the time window is implemented by the gateway (12, 14, 16).

9. Method of any one of claims 1 to 7, wherein the determination (62) of the time window is implemented by a server (18) which receives a monitoring report from the gateway.

10. Method for upgrading a gateway (12, 14, 16) by a server (18), comprising:
- obtaining the time window determined by the method of any one of claims 1 to 9 for the gateway (12, 14, 16);
- upgrading the gateway (12, 14, 16) during said time window.

11. Method for upgrading a plurality of gateways (12, 14, 16) by a server (18), comprising:
- collecting the time windows determined by the method of any one of claims 1 to 9 for the plurality of gateways;
- logically grouping gateways having at least one common time window; and
- upgrading together said grouped gateways during said common time window.

12. Gateway (12, 14, 16) able to determine at least one time window suitable for its upgrade, comprising :
- a monitoring module (30) able to monitor the gateway's activity over a plurality of time periods;
- a determination module (34) able to determine the time window on the basis of the monitoring, such that the gateway's activity during said time window is compatible with said upgrade.

13. Server (18) able to upgrade at least one gateway (12, 14, 16), comprising :
- a reception module (40) for receiving results of a monitoring of the gateway's activity over a plurality of time periods;
- a determination module (42) able to determine a time window suitable for the upgrade of the gateway (12, 14, 16) on the basis of the monitoring results, such that the gateway's activity during said time window is compatible with said upgrade;
- an upgrading module (44) able to upgrade the gateway (12, 14, 16) during said time window.

14. Server (18) of claim 13, comprising a grouping module able to logically group gateways (12, 14, 16) having at least one common time window, wherein the upgrading module (44) is able to upgrade together the grouped gateways during said common time window.

15. A computer-readable program comprising computer-executable instructions to enable a computer to perform the method of any one of claims 1 to 9.
